# EUROPEAN PATENT APPLICATION

(11) **EP 1 221 668 A2**
(43) Date of publication of application: **10.07.2002**
(21) Application number: 01301912.0
(22) Date of filing: 02.03.2001
(51) Int. Cl.: G06F 17/60

(54) **System for matching clearance information and for managing cargo information**

(30) Priority: 01.12.2000 JP 2000367440
(71) Applicant: Hitachi Ltd., Tokyo (JP)
(72) Inventor: Nishio, Kazuhisa, c/o Hitachi Systems & Serv Ltd, Ota-ku, Tokyo 143-8545 (JP); Hanaoka, Tetsurou, c/o Hitachi Ltd Intel Prop Off, Chiyoda-ku, Tokyo 100 (JP); Hayashi, Shinsuke, c/o Hitachi Systems & Serv Ltd, Ota-ku, Tokyo 143-8545 (JP); Nagashima, Yukio, c/o Hitachi Systems & Serv Ltd, Ota-ku, Tokyo 143-8545 (JP); Fujii, Yasushi, c/o Hitachi Ltd Int. Prop Off, Chiyoda-ku, Tokyo 100 (JP)
(74) Representative: Calderbank, Thomas Roger

(57) **Abstract**

Information (8) regarding the flow of contract information and the flow of payment is acquired from the worldwide-known trade finance EDI service in cooperation therewith. Information (9) regarding the flow of distribution is acquired from the electronic clearance system. Matching processing is conducted for two kinds of information items from the trade finance EDI service and the customs according to common information contained in both information items such as a container number of a cargo liner or an item number of the cargo for improvement of job efficiency of each firm concerning the trade. The information items are resultantly unified by establishing a connection therebetween and is accumulated in a database in no special order. There is implemented a device to collect clearance information from a plurality of customs at the same time.

## Description

The present invention relates to a matching system to unify information of trade and information of customs clearance, and in particular, to a clearance information matching system for use in trade to improve efficiency of work in which information of trade business is collected to confirm positions of respective cargoes.

The specification of GB 2 348 026A describes an electronic data interchange system.

While the electronic data interchange for trade finance is being prepared to be developed in the near future, the business of trade has been heretofore achieved by exchanging by mail and/or courier services documents of sheets of paper including a letter of credit (L/C) and a bill of lading (B/L).

Therefore, since the service speed of flow of distribution has been recently increased, there occurs a troublesome event in which cargoes arrive earlier at their destination than documents thereof. This leads to a problem that although the cargoes are at hand, the cargoes cannot be delivered because of absence of necessary documents such as the bill of lading. As can be seen from this example, the trade business is attended with a disadvantage that information cannot be appropriately shared between the parties concerned.

The job in the customs essential to the trade depends on human power, and information about the flow of contraction information, the flow of payment, and the flow of distribution is not sufficiently open or disclosed. This leads to a problem of low processing efficiency of trade business.

For example, when viewed from an importing partner, a flow of the business of trade in the prior art is as follows.
(a) A cargo liner or an aviation company to provide services for an exporting partner (country) prepares documents necessary for the exporting of cargoes and for the flow of distribution such as a bill of lading (i.e., a seaway or airway bill) and sends the documents to the exporting partner. To send the documents, the post or a courier service such as DHL is used.
(b) On receiving the document, the exporter confirms the documents. The exporter then produces copies of the bill of lading and the like and adds documents prepared in the own company to the received documents when necessary and then sends the resultant documents to the importer. To sent the documents, the post or a courier service such as DHL is used.
(c) The importer receives and confirms the documents and adds documents prepared in the own company to the received documents when necessary and then sends the resultant documents to a customs broker. To sent the documents, the post or a courier service such as DHL is used or the importer directly passes the documents to the customs broker.
(d) The customs broker receives and confirms the documents and adds documents prepared in the own company to the received documents when necessary and then brings the resultant documents to the customs office to make an application for the import and receipt of the cargoes.

In the trade business flow of the prior art described above, the jobs of the persons concerned are sequentially carried out. This results in a problem that a long period of time is required to acquire information necessary to recognize the contents of the bill of lading and a status of the flow of distribution. This leads to low efficiency in the job to collect information.

It is therefore an object of the present invention, which has been devised to solve the problem, to collectively provide trade information including information of the flow of contract information, the flow of payment, and the flow of distribution in association with the trade finance EDI service and construction of the electronic clearance service currently being developed in the world and to enhance the sharing of trade transaction information, particularly, prior sharing thereof so as to contribute remarkable improvement of job efficiency in firms associated with foreign trade.

Another object of the present invention is to provide a cargo information system presenting arrival information of cargoess for delivery well earlier at their destination than documents thereof.

To achieve the object according to the present invention, there is provided a clearance information matching system comprising transaction information means for acquiring a plurality of transaction information items (terms and conditions) regarding trade documents provided by a trade finance electronic data interchange (EDI) system, clearance information acquiring means for acquiring a plurality of clearance information items disclosed by customs; and matching means for unifying the transaction information items acquired from the EDI system by said transaction information acquiring means and clearance information items acquired from the customs by said clearance information acquiring means.

By providing the information providing unit to provide the users with information unified by the matching unit, a status of cargoes which is information obtained by unifying the transaction information with the customs information can be supplied to the users.

Additionally, the clearance information acquiring means acquires information items respectively disclosed by a plurality of customs, and hence can recognize a detailed status of each cargo before shipping from an exporting country and after arrival in a port of an importing country.

The matching means unifies the information items using a container number of a cargo liner of an item number of the cargo contained in both of the transaction information and the clearance information, and therefore the transaction information and the clearance information can be efficiently unified.

Furthermore, the clearance information matching system comprises determining means for determining in which one of following five statuses a cargo is: (1) the cargo is before clearance of an exporting country; (2) the cargo is before shipping after clearance of an exporting country; (3) the cargo is after shipping from the exporting country and is before arrival in a port of an importing country; (4) the cargo is after arrival in the port of the importing country and before clearance of the importing country; (5) the cargo is after clearance of the importing country; and display means for displaying the status determined by said determining means.

As a result, the users can recognize at a glance of a display of the matching system in which one of the status the cargo is.

In the trade information and clearance information matching system according to the present invention, by acquiring trade documents information regarding trade documents provided by the trade finance EDI system and the clearance information disclosed by the customs, the trade document information and the clearance information are unified with each other into matching information. The matching information is supplied to the users.

Trade information, namely, information necessary for the collective or centralized management of information regarding trade includes information of the flow of contract information, the flow of payment, and the flow of distribution. Information regarding the flow of contract information and the flow of payment is acquired in cooperation with and from the trade finance EDI service currently being developed in the world.

Customs clearance information, i.e., information regarding the flow of distribution is acquired from an electronic customs system.

Two kinds of information items respectively acquired from the trade finance EDI service and the customs are unified into information through a matching operation according to information contained in the two kinds of information items, for example, a container number or a cargo number of a cargo assigned by a shipping firm or a cargo liner. The unified information is accumulated in a database in no special order.

The unit or device to acquire clearance information acquires not only clearance information of the exporting country but also clearance information of a plurality of other importing countries. Therefore, by matching the information of the flow of contract information and the flow of payment with the information of customs, the information of the flow of distribution is linked with the clearance information of the exporting country and the importing country. This resultantly implements tracking of the flow of distribution (of cargoes/containers).

### IN THE DRAWINGS:

Figs. 1A to 1C are schematic diagrams to explain an overall outline of an embodiment according to the present invention;
Fig. 2 is a diagram showing an overall system configuration of an embodiment according to the present invention;
Fig. 3 is a flowchart to explain matching processing in an embodiment according to the present invention;
Fig. 4 is a flowchart to explain information providing processing in an embodiment according to the present invention;
Fig. 5 is a flowchart to explain information retrieval processing in an embodiment according to the present invention;
Fig. 6 is a diagram showing a data format example of information data of a flow of contract information/flow of payment;
Fig. 7 is a diagram showing a data format example of information data of a flow distribution; and
Fig. 8 is a diagram showing a data format example of unified information data.

Referring now to accompanying drawings, description will be given in detail of an embodiment of the present invention.

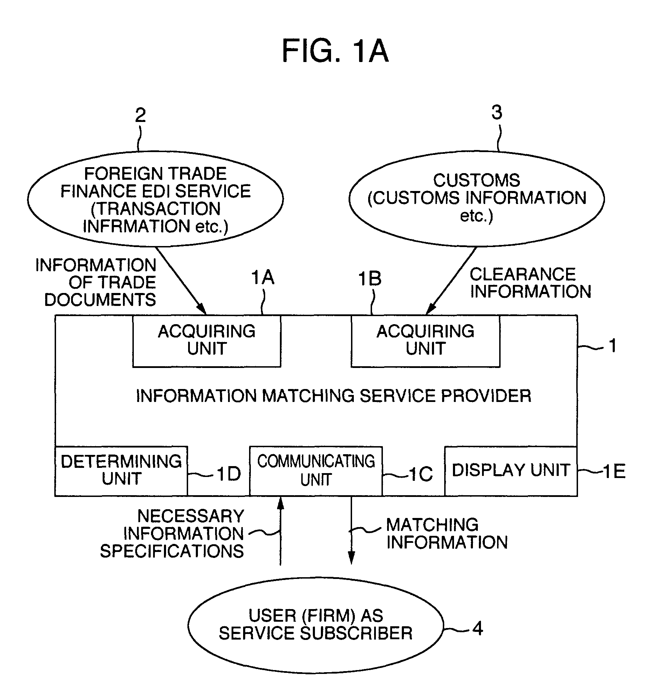

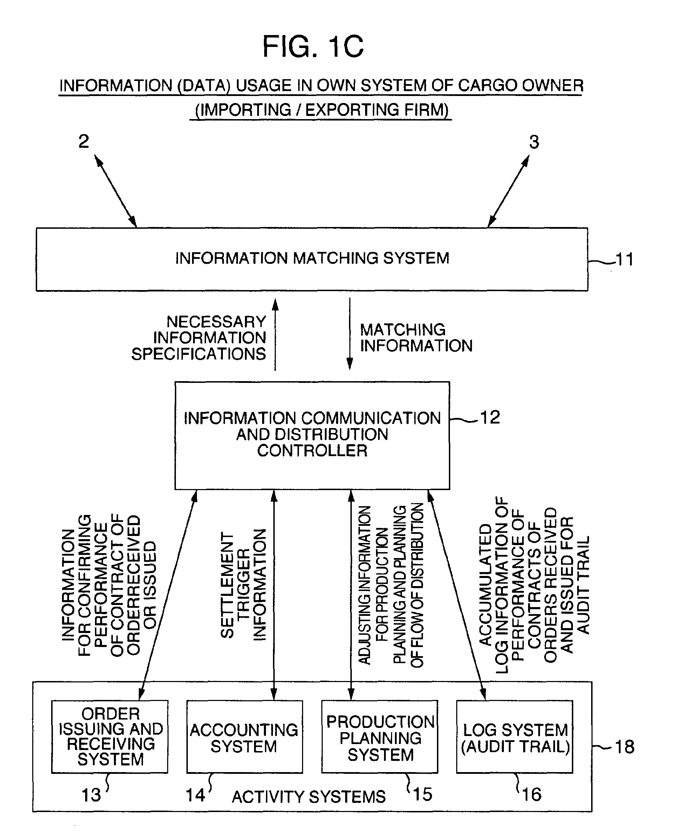

Fig. 1A shows a general overall configuration of the embodiment. In Fig. 1A, a service provider 1 of the present invention 1 conducts a matching operation for information regarding trade documents obtained from a provider 2 of the flow of contract information and the flow of payment and clearance information obtained from a provider 3 of information of the flow of distribution and accumulates information resultant from the matching operation. The accumulated information is supplied to a user 4 subscribed to the matching service.

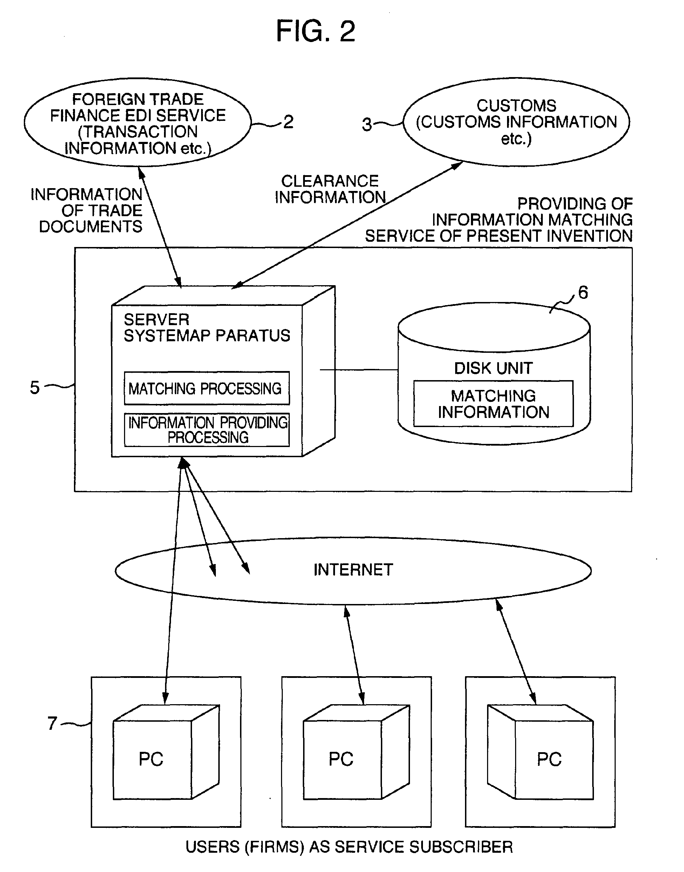

Fig. 2 shows an overall system configuration of an embodiment of the present invention. In Fig. 2, a service provider of the present invention includes a server system apparatus 5 and a disk unit 6.

The server system apparatus 5 processes a matching operation (unifying operation) for information (keys) included in the acquired information regarding trade documents and in the acquired clearance information, for example, to establish a relationship in which using a container number of a cargo, information of the trade documents information and the clearance information can be obtained. Information resultant from the matching operation is accumulated in the disk unit 6. The server system apparatus 5 receives a request for information supply from a terminal 7 of a service subscriber, obtains the requested information from the accumulated information in the disk unit 6, and supplies the information to the service subscriber.

The service subscriber accesses the server system apparatus 5 via a network such as the internet by inputting a log-in command from the terminal unit (personal computer (PC)) 7 to specify a retrieval condition to acquire information necessary to detect a position of a cargo.

The matching information obtained by the matching operation includes status information of clearance of cargoes and goods. The status information is information including for each cargo or for each item of goods such information items as information of arrival at an importing country or shipping or departure from an exporting country and information of clearance of the pertinent cargo in the exporting and importing countries. This makes it possible to retrieve a cargo in a unified or centralized fashion. Although the trade is achieved by sea in the example described above, it is to be understood that the present invention can be applied also to import and export achieved by airplane as well as import and export achieved by land.

Concretely, the status information items accumulated in the disk unit 6 are classified according patterns with mutually different statuses as below.
(A) Database record in which the trade finance EDI information without any related custom clearance information or is not connected to clearance information: in the flow of distribution, the cargo has not cleared the customs of the exporting country and exists still in the exporting country.
(B) Database record in which the trade finance EDI information is connected to clearance information: in the flow of distribution, the cargo has cleared the customs of the exporting country, but has not cleared the customs of the importing country. That is, the cargo (container) is being transported by sea or air.
(C) Database record in which the trade finance EDI information is connected to two clearance information items: in the flow of distribution, the cargo has cleared the customs of the importing country. That is, the cargo is in a customs warehouse of the importing country for delivery therefrom, namely, the cargo is awaiting delivery thereof from the warehouse.

From a viewpoint of tracking of the flow of distribution, when the system cooperates with shipping agents or seaway logistics companies and aviation companies or airway logistics companies to collect necessary information therefrom, the tracking precision can be increased. For example, when information of shipping and arrival of cargoes is acquired from shipping agents, the matching operation can be achieved using the information to determine detailed statuses of cargoes as follows.
(1) Database record in which the trade finance EDI information is connected to neither clearance information nor shipping/arrival information: in the flow of distribution, the cargo has not cleared the customs of the exporting country but still exists in the exporting country.
(2) Database record in which the trade finance EDI information is connected to clearance information but is not connected to shipping/arrival information: in the flow of distribution, the cargo has cleared the customs of the exporting country but exists in a port of the exporting country.
(3) Database record in which the trade finance EDI information is connected to one clearance information item and shipping/arrival information item: in the flow of distribution, the cargo has cleared the customs of the exporting country and has already been shipped. That is, the cargo (container) is being transported by sea.
(4) Database record in which the trade finance EDI information is connected to one clearance information item and shipping information and arrival information: in the flow of distribution, the cargo has arrived in the importing country but has not yet cleared the customs of the importing country. That is, the cargo (container) is waiting for clearance of customs.
(5) Database record in which the trade finance EDI information is connected to two clearance information items and shipping information and arrival information: in the flow of distribution, the cargo has cleared the customs of the importing country. That is, the cargo is in a customs warehouse of the importing country for delivery therefrom.

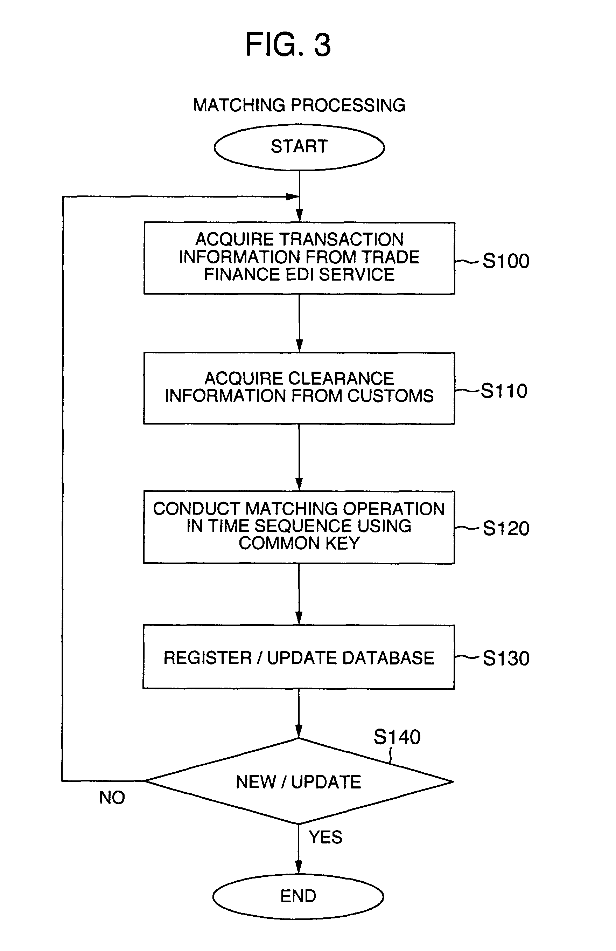

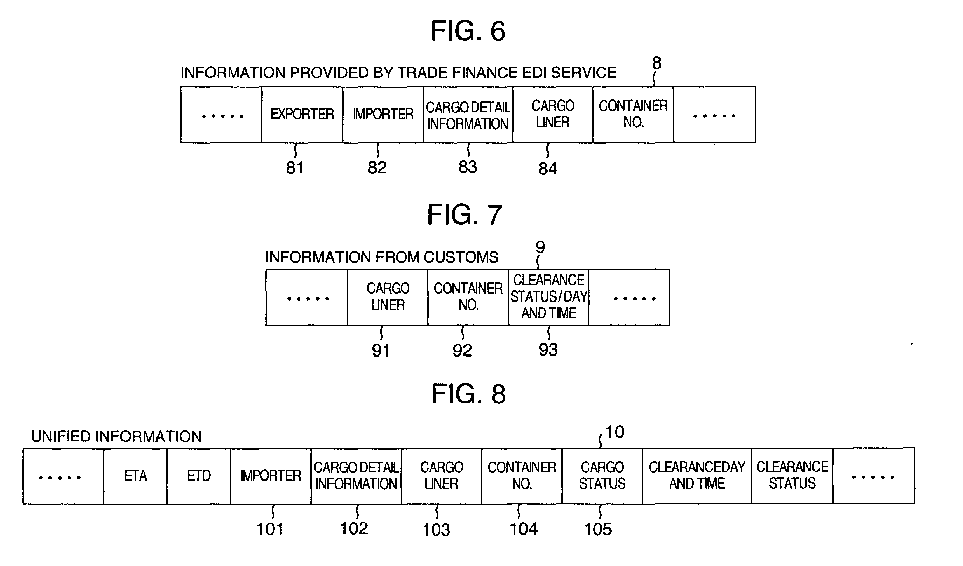

Figs. 3 to 5 show, in flowcharts, processing of the matching information providing operation of the present invention. Figs. 6 to 8 are diagrams showing examples of the data format of data associated with information of the flow of contract information/flow of payment, information of flow of distribution and data resultant from the matching operation of the information items.

Fig. 3 is a flowchart to explain the matching operation in an embodiment. In step S100, the server system apparatus 5 acquires data of information of the flow of contract information/flow of payment 8 (which will be described in conjunction with Fig. 6 later) from the trade finance EDI service. In step S110, the server system apparatus 5 receives data of the flow of distribution 9 (which will be described in conjunction with Fig. 6 later) from the customs.

In step S120, the server system apparatus 5 conducts a matching operation using a container number of a cargo liner, the container number being a common key between the data 8 and the data 9. There is resultantly produced collective data, namely, trade information data 10 (which will be described in conjunction with Fig. 8 later). The data 10 includes the clearance status information. In the matching operation of collective information, it is desirable that the data is stored in a sequence of clearance day and time contained in the information from the electronic clearance system.

In step S130, the trade information data 10 collectively produced as a result of the matching operation is registered to a database in the disk unit 6. For data already registered to the database, the data is updated using an associated data item of the data 10. In step S140, a check is made to determine presence or absence of new/update information. If such information is present, the process goes to step S100; otherwise, the processing is terminated.

The information thus unified through the matching operation is in a limitative or selective fashion disclosed to the users subscribed to the service. The user accesses the system by inputting a log-in command from an access screen and visually checks the information in a sequence opposite to the time sequence of the clearance day and time. Namely, the user views the latest information at first.

In operation of the user screen, it is possible to specify a retrieval condition. By specifying a particular container number and/or a business party name of the user, only records of information pertinent to the key are efficiently and easily retrieved from the large amount of information items accumulated in the time sequence.

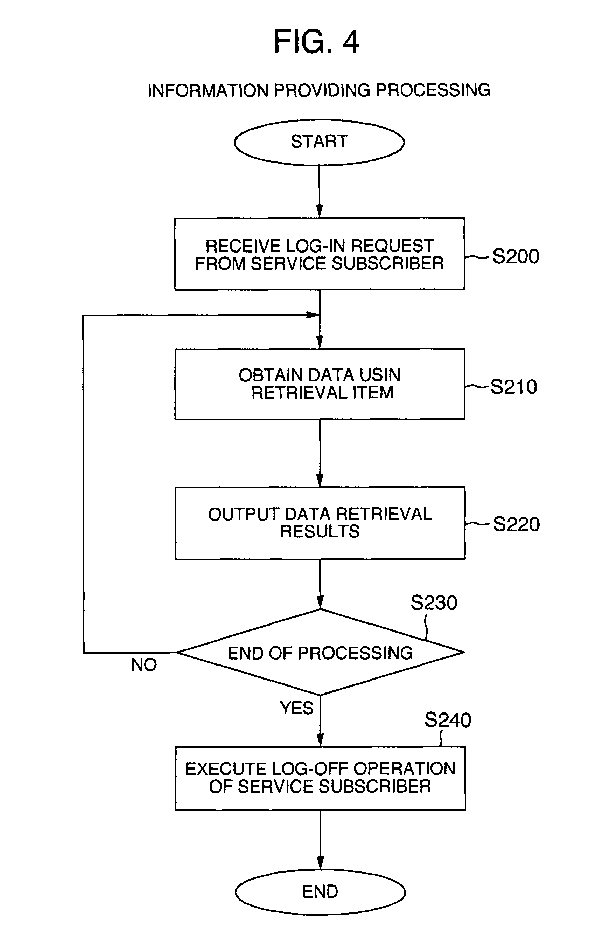

Fig. 4 is a flowchart to explain an information providing operation in the embodiment. In step S200, a log-in request is received from a user subscribed to the service. In step S210, on receiving a retrieval item (a container number, a business party name, or the like) specified by the user in the log-in request, a retrieval is conducted using the retrieval item to make a search through the trade information data 10 beforehand unified in the database of the disk unit 6 to thereby obtain records satisfying the retrieval condition.

In step S220, the obtained result is sent to the terminal 7 of the user having issued the request. In step S230, a next request is received from the user having received the obtained result. That is, if the user having issued the log-in request desires to terminate the processing, the user inputs a log-off request. The request is received in step S240. Otherwise, the process returns to step S210 to execute the processing above.

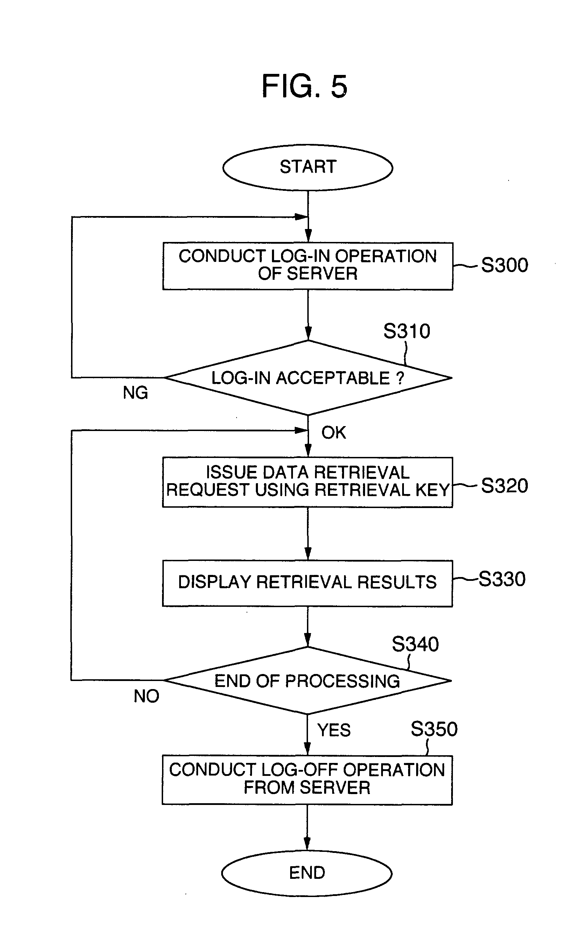

Fig. 5 is a flowchart to explain an information retrieval operation in an embodiment. In step 5300, a user as a service subscriber inputs a user identifier and a password from the access screen of the terminal 7 and issues a log-in request to the server system apparatus 5. In step S310, a check is made to determine whether or not the log-in is acceptable. If acceptable, control goes to step S320. If the log-in is rejected, the user conducts again a log-in operation to the server system apparatus 5 (step S300).

In step S320, the user specifies a retrieval item (a container number, a business party name, or the like) and instructs the server system apparatus 5 to conduct a retrieval through the trade information. Results of the retrieval are then displayed on the terminal 7.

If the processing continues in step S340, the process returns to step S320 to continuously execute the processing above. If the processing is to be terminated, the user issues a log-off request to the server system apparatus 5 in step S350.

Fig. 6 shows an example of the data format of transaction information, namely, data of the flow of contract information/flow of payment provided by the trace finance EDI service. For each importer 81, the data of the flow of contract information/flow of payment 8 includes cargo detail information (an item name, a model, a quantity, etc.) 82, a cargo liner 83, and a container number 84, and the like.

Fig. 7 shows an example of the data format of clearance information provided by the customs, i.e., information data of the flow of distribution. The information data of the flow of distribution 9 includes a cargo liner 91, a container number 92, a clearance status (information indicating whether or not the cargo has cleared the customs) 93, and the like.

After shipping of the cargo, information items such as the cargo liner and the container number is notified to the exporter on a document or via a communication line.

Fig. 8 shows an example of the data format of unified information data resultant from the matching operation using the information data of the flow of contract information/flow of payment and the information data of the flow of distribution according to a container number obtained from a cargo liner. The unified trade information data 10 includes an importer 101, a cargo detail information 102, a cargo liner 103, a container number 104, which have been described above, and a cargo status 105 which is obtained by the unifying operation. The cargo status 105 is information indicating a position of the cargo in the flow of distribution. Therefore, by achieving a retrieval through the unified trade information data 10 using, for example, the importer 101 as a retrieval key to display an item resultant from the retrieval, particularly, a cargo status 105, it is possible to indicate at which one of positions of the flow of distribution the cargo of the pertinent importer exists.

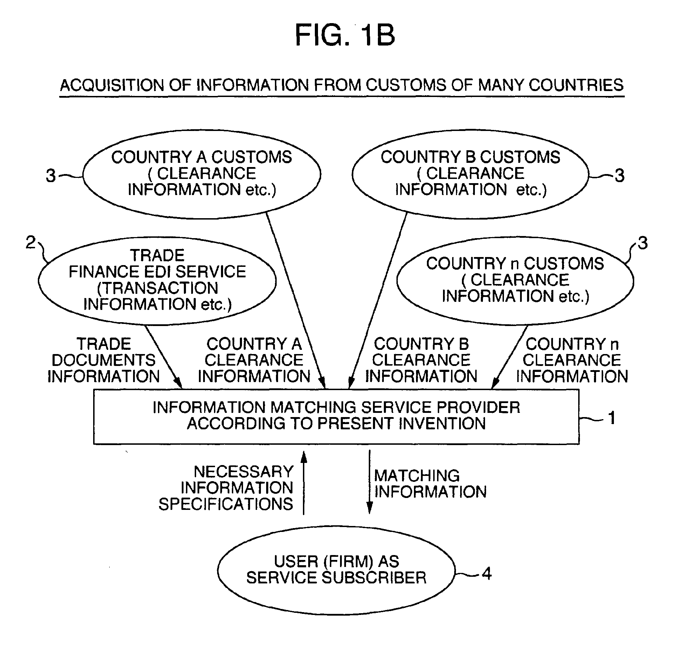

Fig. 1B schematically shows an embodiment of the present invention in which a matching service provider receiving information of cargo clearing the customs of various countries produces matching information by establishing connections between information items for each cargo and produces the matching information and provides the information to users or subscribers of the matching system.

In the matching system of the embodiment, a plurality of customs information items are linked with one information item of the flow of contact information/flow of payment. This connects information of the flow of distribution to clearance information items of the exporting and importing countries. Resultantly, the tracking of the flow of distribution (of a cargo/container) can be achieved.

The present invention is not restricted by the embodiments. The embodiments can be changed and modified in various ways. For example, in the description of the embodiments, the container number of a cargo liner and the item number of the cargo are employed as common information included in both of the transaction information and the clearance information. However, the present invention can be similarly applied even when other information ordinarily used in the flow of contact information, the flow of payment, and the flow of distribution is used as the common information included in both of the transaction information and the clearance information.

Fig. 1C shows a corporate activity systems 18 connected to an information communication and distribution controller 2 which receives unified matching information from a matching system 11. The corporate activity systems 18 may includes systems of various jobs in a firm, for example, an order issuing and receiving system 13, an accounting system 14, a production planning system 15, and a log accumulating system 16 to store or to accumulate log information for audit trail. When a matching information item matches a predetermined condition of flow of distribution, the controller 12 sends information of erasure of an order issuing or receiving contract to the order issuing/receiving system 13. The accounting system 14 similarly receives settlement trigger information from the controller 12 to execute predetermined settlement processing without any manual posting operation by human power.

The production planning system 15 produces a production and distribution plan according to a predetermined sequence. Having received information of the flow of distribution on a trade route from the information communication and distribution controller 12, the production planning system 15 can produces in a predetermined sequence a concrete schedule of the flow of distribution. The schedule includes specific information items such as a quantity, a route, and a day and time to distribute the cargo to each destination of the country.

The log system 18 is a system to continuously updates and accumulates the status of performance of each order issued/received. The accumulated information is effectively used for audit trail. Having received matching information from the matching system 11, the log system 18 can update the accumulated information in a predetermined sequence.

The information items ETD (data of arrival in port) and ETA (shipping date) shown in Fig. 8 are items to determine the point of time of the pertinent cargo, namely, that the cargo is before or after the shipment thereof. The clearance status is an item to determine whether or not the cargo has been cleared the customs in each of the exporting and importing countries.

As above, it is possible to enhance sharing of information regarding the trade according to the present invention. This considerably reduces frequency of information collecting activities in the business of the trade, and the period of time required for each information collecting operation can be remarkably minimized. As a result, the job efficiency of the trade business can be considerably improved.

In accordance with the present invention, the flow of distribution in the trade can be tracked and hence the state of progress of performance of a contract can be confirmed. Moreover, the pertinent information can be beforehand confirmed. Consequently, for example, on an importer side, preparation for a next job such as reservation of a truck for delivery of a cargo can be started in advance and hence the job efficiency is improved. In accordance with the present invention, the importer can receive the cargo just after the cargo has cleared the customs and hence the charge of the customs storage can be remarkably decreased. This lowers expenses required.

## Claims

1. A clearance information matching system, comprising:
transaction information acquiring means (1A) for acquiring a plurality of transaction information items regarding trade documents provided by a trade finance electronic data interchange (EDI) system (2);
clearance information acquiring means (1B) for acquiring a plurality of clearance information items (9) disclosed by customs (3); and
matching means (1) for unifying the transaction information items acquired by said transaction information acquiring means (1A) and clearance information items (9) acquired by said clearance information acquiring means (1B).

2. A clearance information matching system according to claim 1, further comprising information providing means (1C) for supplying the information unified by said matching means to a user.

3. A clearance information matching system according to claim 1 or 2, wherein said clearance information acquiring means (1B) acquires information items respectively disclosed by a plurality of customs (3).

4. A clearance information matching system according to claim 1, 2, or 3, wherein said matching means unifies the information items using a container number of a cargo liner of an item number of the cargo contained in both of the transaction information and the clearance information.

5. A clearance information matching system, comprising:
determining means (1D) for determining in which one of following five statuses a cargo is
(a) the cargo is before clearance of an exporting country;
(b) the cargo is before shipping after clearance of an exporting country;
(c) the cargo is after shipping from the exporting country and is before arrival in a port of an importing country;
(d) the cargo is after arrival in the port of the importing country and before clearance of the importing country;
(e) the cargo is after clearance of the importing country; and
display means (1E) for displaying the status determined by said determining means.

6. A clearance information matching system according to claim 1, wherein the clearance information items are connected to the transaction information items according to a matching state between a container number (92) contained in the clearance information items and a container number (84) contained in the transaction information items.

7. A clearance information matching system according to claim 2, wherein said information providing means includes web means for communicating information with users.

8. A clearance information matching system according to claim 1, comprising:
determining means (1D) for determining in which one of following five statuses a cargo is
the cargo is before clearance of an exporting country;
the cargo is before shipping after clearance of an exporting country;
the cargo is after shipping from the exporting country and is before arrival in a port of an importing country;
the cargo is after arrival in the port of the importing country and before clearance of the importing country;
the cargo is after clearance of the importing country; and
output means (1E) for providing an output from said determining means.

9. A program product to be implemented in a clearance information matching system to operate a program thereon with the steps comprising:
acquiring a plurality of transaction information items regarding trade documents provided by a trade finance electronic data interchange (EDI) system (2);
acquiring a plurality of clearance information items (9) disclosed by customs (3); and
unifying the transaction information items acquired in said transaction information acquiring step and clearance information items (9) acquired in said clearance information acquiring step.

10. A program product according to claim 9, said unifying step comprises a connecting step for connecting the clearance information itemswith the transaction information items according to a matching state between a container number (92) contained in the clearance information items and a container number (84) contained in the transaction information items.
